# EUROPÄISCHE PATENTSCHRIFT

(11) **EP 2 099 658 B1**
(45) Veröffentlichungstag und Bekanntmachung des Hinweises auf die Patenterteilung: **27.10.2010**
(21) Anmeldenummer: 07847508.4
(22) Anmeldetag: 29.11.2007
(51) Int. Cl.: B60R 21/217

(54) **GEHÄUSE FÜR EINE GASSACKANORDNUNG**
HOUSING FOR AN AIRBAG ARRANGEMENT
BOÎTIER POUR UN ENSEMBLE DE SAC À GAZ

(30) Priorität: 05.12.2006 DE 202006018701 U
(43) Veröffentlichungstag der Anmeldung: 16.09.2009
(73) Patentinhaber: Takata-Petri AG, 63743 Aschaffenburg (DE)
(72) Erfinder: FELLER, Jens, 89171 Illerkirchberg (DE); BANNERT, Stefan, 89547 Gerstetten (DE)
(74) Vertreter: Staroske, Sandro
(86) Internationale Anmeldenummer: PCT/EP2007/062992
(87) Internationale Veröffentlichungsnummer: WO 2008/068188

(56) Entgegenhaltungen:
- DE-A1- 19 750 945
- DE-U1- 20 207 400
- GB-A- 2 396 336
- US-A- 5 058 919
- US-A- 5 533 750
- US-A- 5 700 028

## Beschreibung

Die Erfindung betrifft ein Gehäuse für eine Gassackanordnung einer Fahrzeuginsassen-Schutzvorrichtung.

Aus der DE 197 50 945 A1 ist ein Gassackmodul für eine Insassen-Schutzvorrichtung mit einem Gehäuse zur Aufnahme von Komponenten der Schutzvorrichtung bekannt. Konkret sind in dem Gehäuse ein aufblasbarer Gassack sowie ein Gasgenerator zum Aufblasen des Gassacks angeordnet. Die Zündung des Gasgenerators erfolgt über eine außerhalb des Gehäuses befindliche Zündelektronik, mit der der Gasgenerator über ein Zündkabel verbunden ist. Der Gasgenerator weist zur Aufnahme eines Steckers des Zündkabels einen elektrischen Anschluss auf.

Um das Zündkabels mit dem im Gehäuse befindlichen Gasgenerator zu verbinden, weist das Gehäuse eine Durchgangsöffnung für das Zündkabel auf, durch die hindurch das Zündkabel in das Gehäuseinnere geführt ist. Die Öffnung hat einen Durchmesser, der es erlaubt, auch den Zündkabelstecker durch die Durchgangsöffnung hindurchzuziehen. Dennoch ist das Durchziehen des Zündkabels durch die Durchgangsöffnung zur Montage des Zündkabels umständlich.

Eine weitere bekannte Möglichkeit, die Montage eines Zündkabels an einem in einem Gehäuse befindlichen Gasgenerator zu ermöglichen, besteht darin, den Gasgenerator mit einem Abschnitt, in dem sich der Zündkabelanschluss befindet, aus dem Gehäuse herausragen zu lassen, so dass der Anschluss zum Einstecken des Zündkabelsteckers von außen zugänglich ist. Diese Montagevariante hat den Nachteil, dass insbesondere ein per Stecker mit dem Gasgenerator verbundenes Zündkabel unbeabsichtigt (etwa bereits während der Montage der Gassackanordnung) vom Gasgenerator abgezogen werden kann.

Darüber hinaus ist aus der gattungsgemässen DE 202 07 400 U1 ein Gehäuseteil für ein Airbagmodul bekannt, das die Montage eines Zündkabels an einem innerhalb des Gehäuseteils angeordneten Gasgenerator erlaubt.

Das von der vorliegenden Erfindung zu lösende Problem besteht darin, ein Gehäuse für eine Gassackanordnung zu schaffen, mit dem in einfacher Weise eine sichere Verbindung einer elektrischen Verbindungsleitung mit einer Komponente der Gassackanordnung herstellbar ist.

Dieses Problem wird durch das Gehäuse mit den Merkmalen des Anspruchs 1 gelöst. Bevorzugte und vorteilhafte Weiterbildungen der Erfindung sind in den abhängigen Ansprüchen angegeben.

Danach wird ein Gehäuse für eine Gassackanordnung einer Fahrzeuginsassen-Schutzvorrichtung angegeben, das aufweist:
- mindestens zwei Gehäuseteile, die jeweils eine mit einer Verbindungskante abschließende Seitenwand aufweisen, wobei die Gehäuseteile bei geschlossenem Gehäuse mit den Verbindungskanten aufeinander liegen;
- eine beabstandet zur Verbindungskante in der Seitenwand eines der Gehäuseteile gebildete Durchgangsöffnung für eine mit einer Komponente der Gassackanordnung zu verbindende elektrische Verbindungsleitung; und
- eine in der Seitenwand dieser Gehäuseteil ausgebildete und von der Verbindungskante zur Durchgangsöffnung verlaufende Zugangsöffnung, durch die hindurch eine senkrecht zur Seitenwand ausgerichtete elektrische Verbindungsleitung in die Durchgangsöffnung eingelegt werden kann.

Die Erfindung ermöglicht, eine zu montierende elektrische Verbindungsleitung einfach durch die in einem der Gehäuseteile des Gehäuses ausgebildete Zugangsöffnung in die Durchgangsöffnung einzulegen, so dass das umständliche Durchziehen der elektrischen Verbindungsleitung durch die Durchgangsöffnung entfällt. Die Zugangsöffnung in der Seitenwand schafft einen Zugang zu der Durchgangsöffnung von der Verbindungskante aus, über die die Gehäuseteile (nach Einlegen der elektrischen Verbindungsleitung) beim Schließen des Gehäuses miteinander zu verbinden sind. Insbesondere kann auch eine mit einem Stecker vorkonfektionierte elektrische Verbindungsleitung über die Zugangsöffnung schnell und einfach montiert werden.

Dadurch, dass die fertig montierte elektrische Verbindungsleitung durch eine Durchgangsöffnung in dem Gehäuse hindurch verläuft, ist zudem eine effiziente Zugentlastung der elektrischen Verbindungsleitung realisierbar. Mit der Erfindung ist somit eine einfache Montage der elektrischen Verbindungsleitung möglich, ohne auf teine wirkungsvolle Zugentlastung verzichten zu müssen. Auf konkrete Möglichkeiten zur Herstellung einer Zugentlastung wird weiter unten eingegangen.

Bei der elektrischen Verbindungsleitung handelt es sich insbesondere um ein Zündkabel, das einen zum Aufblasen eines Gassacks der Gassackanordnung vorgesehenen Gasgenerator mit einer Zündelektronik verbindet. Es kann jedoch auch ein sonstiges elektrisches Kabel sein, die eine weitere Komponente der Gassackanordnung (z. B. auch zusätzlich zum Zündkabel) mit einer außerhalb des Gehäuses befindlichen Einrichtung (z. B. eine Steuerung) verbindet.

Selbstverständlich ist die Erfindung nicht auf eine einzelne Durchgangs- und eine einzelne Zugangsöffnung beschränkt; es können je nach Bedarf beliebig viele dieser Öffnungen vorgesehen sein, auch in beiden Gehäuseteilen. Bevorzugt weist jedoch nur eines der Gehäuseteile eine Durchgangsöffnung auf.

Es wird darauf hingewiesen, dass die Durchgangsöffnung ist nicht etwa halbkreis- oder kreissegmentartig an die Verbindungskante angrenzt, sondern beabstandet zu dieser angeordnet und über die Zugangsöffnung in der Seitenwand mit der Verbindungskante verbunden ist. In einer bevorzugten Ausgestaltung der Erfindung ist Durchgangsöffnung vollkreisförmig ausgebildet.

Weiterhin ist bevorzugt vorgesehen, dass die Zugangsöffnung in Form eines Schlitzes ausgebildet ist. Der Schlitz weist eine Haupterstreckungsrichtung und eine im Vergleich mit der Länge der Haupterstreckungsrichtung geringe Breite auf. Er kann, muss aber nicht, längserstreckt ausgebildet sein. Der Schlitz kann z.B. auch einen gekrümmten oder gezackten Verlauf haben.

Allgemein verläuft die Zugangsöffnung zwischen der Verbindungskante und der Durchgangsöffnung bevorzugt näherungsweise geradlinig. Es können natürlich jedoch je nach konkreter Ausgestaltung des Gehäuses bzw. der Gassackanordnung verschiedene Verläufe der Zugangsöffnung (insbesondere wenn diese als Schlitz ausgebildet ist) realisiert werden, z.B. auch ein mäanderförmiger Verlauf.

In einer besonders bevorzugten Weiterbildung der Erfindung ist die Zugangsöffnung so ausgebildet, dass ein Herausbewegen einer in die Durchgangsöffnung eingelegten elektrischen Verbindungsleitung aus dem Gehäuseteil hinaus über die Zugangsöffnung hindurch verhindert ist bzw. die Zugangsöffnung dem Herausbewegen entgegenwirkt. Hierzu kann die Zugangsöffnung wie erwähnt z. B. zumindest abschnittsweise gekrümmt oder mäanderförmig verlaufen.

In jedem Fall verläuft die Zugangsöffnung in dieser Ausbildung der Erfindung so, dass einer Zugkraft auf die elektrische Verbindungsleitung in Richtung auf die Verbindungskante zumindest teilweise durch die Zugangsöffnung begrenzende Abschnitte der Seitenwand entgegengewirkt wird. Dadurch wird ein Herausbewegen der elektrischen Verbindungsleitung aus der Durchgangsöffnung bzw. aus der Zugangsöffnung heraus verhindert. Hierzu sind im Prinzip viele Verläufe der Zugangsöffnung möglich, z. B. auch ein zackenartiger Verlauf.

In einer anderen vorteilhaften Weiterbildung der Erfindung ist die Seitenwand im Bereich der Zugangsöffnung (d. h. insbesondere entlang der Zugangsöffnung, wenn diese schlitzförmig oder längserstreckt ausgebildet ist) mit einer stabilisierenden Struktur versehen. Diese stabilisierende Struktur kann z. B. durch eine Verdickung der Seitenwand im Bereich der Zugangsöffnung gebildet sein. Des Weiteren ist es möglich, dass zur Stabilisierung ein Steg bzw. mehrere Stege oder eine Wulst im Bereich der Zugangsöffnung (entlang oder senkrecht zu ihr) angeordnet sind.

Insbesondere ist die stabilisierende Struktur so ausgebildet, dass beim Einführen einer elektrischen Verbindungsleitung durch die Zugangsöffnung bzw. bei Krafteinwirkung auf eine in die Durchgangsöffnung eingelegte elektrische Verbindungsleitung die Seitenwand kaum verbogen wird, um eine stabile Führung der elektrischen Verbindungsleitung in der Durchgangsöffnung bzw. beim Einführen der elektrischen Verbindungsleitung durch die Zugangsöffnung zu gewährleisten. Die stabilisierende Struktur wirkt bevorzugt mit einer Zugentlastung zusammen, um einem Verbiegen der Seitenwand durch eine von der Zugentlastung auf die Seitenwand übertragene Kraft entgegenzuwirken.

Des Weiteren umfasst die Erfindung ein Gassackmodul für ein Fahrzeuginsassen-Rückhaltesystem, das ein wie oben beschriebenes Gehäuse aufweist. In dem Gehäuse ist eine Komponente angeordnet, zu der sich durch die Durchgangsöffnung im Gehäuse hindurch eine elektrische Verbindungsleitung erstreckt. Bei der Komponente handelt es sich insbesondere um einen Gasgenerator, der zum Aufblasen eines im Gehäuse angeordneten aufblasbaren Gassacks dient. Die elektrische Verbindungsleitung, die sich durch die Durchgangsöffnung im Gehäuse zum Gasgenerator erstreckt, ist hier das Zündkabel zum Zünden des Gasgenerators.

In besonders bevorzugter Weise sind die Gehäuseteile des Gehäuses so angeordnet, dass sie mit ihren Verbindungskanten aneinander grenzen, wodurch ein Herausbewegen der elektrischen Verbindungsleitung aus dem Gehäuseteil durch die in ihm ausgebildete Zugangsöffnung verhindert wird.

Insbesondere ist das Gehäuse durch die beiden Gehäuseteile gebildet (d.h. das Gehäuse weist genau zwei Halbschalen auf), wobei die Gehäuseteile an ihren Verbindungskanten miteinander verbunden sind. Zum Verbinden der beiden Gehäuseteile sind dem Fachmann verschiedene Möglichkeiten bekannt, wie z. B. Verhaken, Verclipsen, Verschrauben, Kleben oder Schweißen. Bevorzugt befindet sich eine Verbindungsstelle (z. B. eine Schraube, ein Klebe- oder Schweißpunkt) im Bereich der Zugangsöffnung, d. h. im Bereich des Durchtritts der Zugangsöffnung durch die Verbindungskante, um in diesem Bereich eine besonders feste Verbindung der Gehäuseteile zu erzeugen und ein Herausrutschen der elektrischen Verbindungsleitung aus der Zugangsöffnung zu verhindern. Es wird auch darauf hingewiesen, dass die Gehäuseteile an einem Abschnitt mittels eines Scharniers klappbar (z.B. auch einstückig) miteinander verbunden sein können.

In einer besonderen Weiterbildung des erfindungsgemäßen Gassackmoduls weist die in Form eines Schlitzes gebildete Zugangsöffnung eine quer zu ihrer Haupterstreckungsrichtung zu messende Breite auf, die kleiner oder größer als der Außendurchmesser der elektrischen Verbindungsleitung sein kann. Ein kleinerer Durchmesser dient dazu, ein Hineinrutschen in die Zugangsöffnung einer in der Durchgangsöffnung befindlichen elektrischen Verbindungsleitung bzw. zumindest ein Herausrutschen aus der Zugangsöffnung zu verhindern. Beim Einlegen der elektrischen Verbindungsleitung durch die Zugangsöffnung hindurch in die Durchgangsöffnung wird es durch die Zugangsöffnung "hindurchgequetscht", was z.B. durch eine entsprechend flexible Außenhülle (Isolierung) der elektrischen Verbindungsleitung ermöglicht wird.

Ist die Breite der Zugangsöffnung größer als der Außendurchmesser der elektrischen Verbindungsleitung, so ermöglicht dies ein einfaches Einführen der Verbindungsleitung in die Durchgangsöffnung und somit eine besonders einfache Montage. Das Herausrutschen der elektrischen Verbindungsleitung aus der Durchgangsöffnung durch die Zugangsöffnung kann in diesem Fall durch andere Maßnahmen verhindert werden, insbesondere durch das ausreichend feste Verbinden der beiden Gehäuseteile.

Das Gehäuseteil mit der Durchgangsöffnung für die elektrische Verbindungsleitung ist bevorzugt eine Unterschale eines Modulgehäuses (eines Gassackmoduls), während das zweite (z.B. nicht mit einer Durchgangsöffnung versehene) Gehäuseteil eine Oberschale des Modulgehäuses ist. Die Oberschale deckt die Gassackanordnung zum Fahrzeuginnenraum ab. Im Auslösefall erstreckt sich der sich entfaltende Gassack durch die Oberschale (genauer durch einen in der Oberschale angeordneten Aufreißbereich) in den Fahrzeug-Innenraum hinein. Die Unterschale weist in einem an einem Fahrzeug montierten Gassackmodul vom Fahrzeug-Innenraum weg.

In einer weiteren Ausgestaltung des Moduls ist über der Zugangsöffnung ein durchgehendes Halteelement angeordnet, das ein Herausbewegen der elektrischen Verbindungsleitung aus dem Gehäuseteil durch die Zugangsöffnung hindurch verhindert. Dies ist insbesondere während der Montage der elektrischen Verbindungsleitung in dem Gehäuseteil wichtig, um hier ein Herausrutschen der elektrischen Verbindungsleitung zu verhindern. Zusätzlich kann das Haltelement so angeordnet sein, dass es auf die die Zugangsöffnung begrenzenden Abschnitte der Seitenwand eine Zugkraft ausübt, so dass sich die Breite der Zugangsöffnung verkleinert, wodurch ein Herausrutschen der elektrischen Verbindungsleitung aus der Durchgangsöffnung heraus oder durch die Zugangsöffnung hindurch zusätzlich verhindert werden kann.

Die vorliegende Erfindung ermöglicht - wie oben bereits erwähnt - neben der schnellen und einfachen Montage der elektrischen Verbindungsleitung auch das Anordnen einer Zugentlastungsstruktur, die ein Herausziehen der elektrischen Verbindungsleitung aus dem Gehäuse in einer Richtung parallel zur Erstreckungsrichtung der elektrischen Verbindungsleitung verhindert. Hier kann zusätzlich die Kontur der Durchgangsöffnung dem Zugentlastungsmechanismus angepasst sein.

Eine von der Erfindung erfasste Zugentlastungsstruktur ist insbesondere ein an der elektrischen Verbindungsleitung angeordnetes und am Rand der Durchgangsöffnung anliegendes Element. Diese kann z.B. eine separat oder einstückig etwa mit dem Mantel der elektrischen Verbindungsleitung ausgebildete Verdickung sein, z.B. in Form einer Kugel oder eines Kegels.

Eine weitere Variante der Zugentlastung besteht darin, dass sie als radiale Einbuchtung in der elektrischen Verbindungsleitung ausgebildet ist, in die der Rand der Durchgangsöffnung eingreift.

Darüber hinaus können selbstverständlich weitere, bekannte Zugentlastungen zusammen mit dem erfindungsgemäßen Gehäuses verwendet werden, wie z. B. Kabelbinder. Prinzipiell ist es möglich, die Zugentlastungsstruktur im Gehäuse als auch außerhalb des Gehäuses, d. h. beidseitig der Durchgangsöffnung anzuordnen. Dies ist z. B. bei Kabelbindern oder Klemmvorrichtungen möglich.

Die Erfindung wird im Folgenden anhand von Ausführungsbeispielen unter Bezugnahme auf die Figuren im Einzelnen erläutert. Es zeigen:
- Fig. 1: eine Seitenansicht einer Ausführungsvariante des erfindungsge- mäßen Gehäuses;
- Figuren 2a bis 2g: Varianten der Zugangsöffnung;
- Figuren 3a bis 3i: Varianten der Zugentlastung.

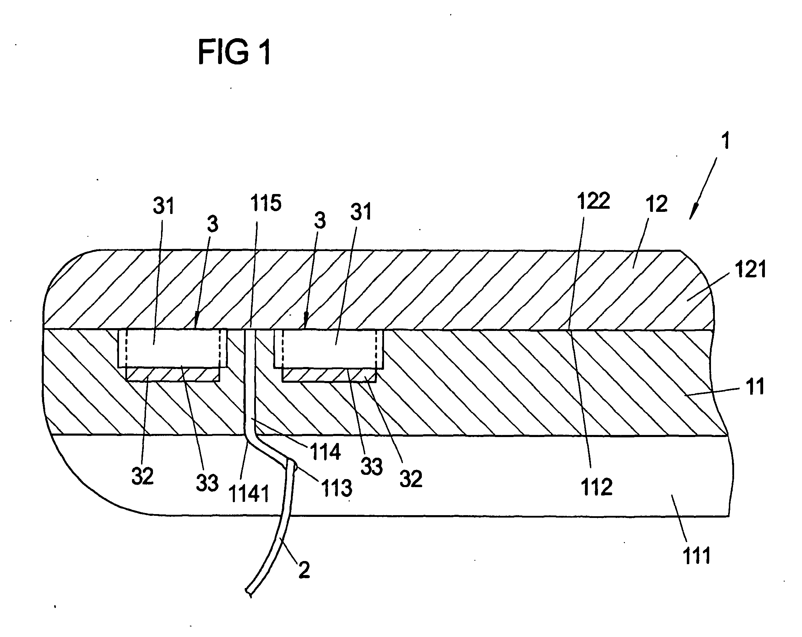

Die Figur 1 zeigt ein Gehäuse 1 für eine Gassackanordnung in Seitenansicht. Das Gehäuse 1 weist ein als Unterschale 11 ausgebildetes erstes Gehäuseteil auf, an die sich ein als Oberschale 12 ausgebildetes zweites Gehäuseteil anschließt. Die Unter- und die Oberschale weisen jeweils eine Seitenwand 111, 121 auf, die jeweils mit einer Verbindungskante 112, 122 abgeschlossen sind. Mit anderen Worten ist der Rand der Seitenwände 111, 121 als Verbindungskante gebildet, wobei die beiden Gehäuseteile 11, 12 über die aufeinander liegenden Verbindungskanten 112, 122 miteinander verbunden sind.

In der Unterschale 11 ist eine Durchgangsöffnung 113 ausgebildet, durch die hindurch sich eine elektrische Verbindungsleitung in Form eines Zündkabels 2 von einer sich außerhalb des Gehäuses 1 befindenden Zündelektronik (nicht dargestellt) ins Innere des Gehäuses 1 hinein erstreckt und dort mit einem Gasgenerator (nicht dargestellt) verbunden ist. Die Durchgangsöffnung 113 ist über eine in der Seitenwand 111 als Schlitz 114 ausgebildete Zugangsöffnung mit der Verbindungskante 112 verbunden, so dass der Schlitz 114 in der Verbindungskante 112 einen Zugang 115 ausbildet, durch den das Zündkabel 2 bei seiner Montage in den Schlitz 114 eingeführt und durch den Schlitz 114 hindurch in die Öffnung 113 eingelegt werden konnte.

Der Schlitz 114 weist eine Krümmung 1141 auf, die ein unabsichtliches Herausbewegen des in der Durchgangsöffnung 113 befindlichen Zündkabels 2 durch den Schlitz 114 erschwert (z.B. während der Montage des Gehäuses). Ein Herausbewegen des Zündkabels 2 aus dem Schlitz 114 durch den in der Verbindungskante 112 gebildeten Durchgang 115 ist im montierten Gehäuse zusätzlich dadurch verhindert, dass die Verbindungskante 122 der Oberschale 12 im Bereich des Durchgangs 115 fest auf der Verbindungskante 112 des Unterschale 11 aufliegend mit dieser verbunden ist.

Um die Oberschale 12 mit der Unterschale 11 insbesondere im Bereich des Schlitzes 114 bzw. des Zugangs 115 fest zu verbinden, ist im Bereich des Schlitzes 114 eine Verbindungsstruktur in Form zweier Clipverbindungen 3 vorgesehen, die beidseitig des Schlitzes 114 an der Außenseite des Gehäuses 1 angebracht sind. Die Clipverbindungen 3 weisen jeweils eine erste, mit der Oberschale 12 verbundene Struktur 31 auf, die eine zweite, an der Unterschale 11 angebrachte Struktur 32 teilweise überlappt und mit einer ebenfalls an der Unterschale 11 angeordneten Raststruktur 33 verrastet ist.

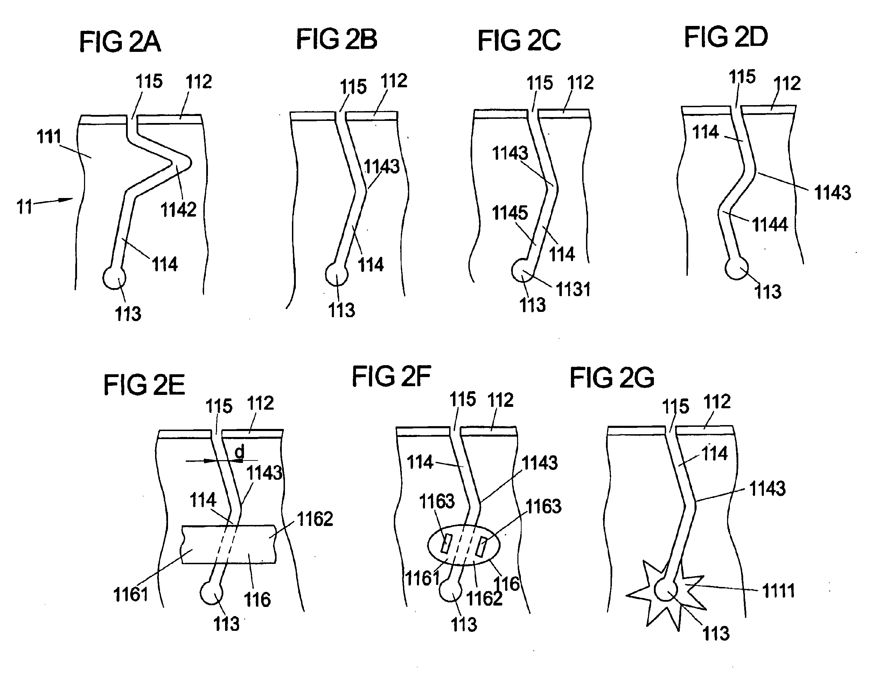

Die Figuren 2a bis 2g stellen verschiedene Ausführungsvarianten einer schlitzförmigen Zugangsöffnung und einer Durchgangsöffnung dar. Die in diesen Figuren gezeigten Schlitze 114 sind analog zur Figur 1 in einer Seitenwand 111 einer Unterschale 11 ausgebildet. Es wird darauf hingewiesen, dass natürlich auch mehrere Schlitze gemeinsam in einem Gehäuseteil oder in sämtlichen Gehäuseteilen des Gehäuses angeordnet sein können, auch mit unterschiedlicher Ausgestaltung. Zudem sind selbstverständlich auch alle möglichen Kombinationen von Merkmalen der in den Figuren 2a bis 2g dargestellten Schlitze und Durchgangsöffnungen möglich.

Der Schlitz 114 der Figur 2a verbindet eine Durchgangsöffnung 113 mit einem in einer Verbindungskante 112 der Seitenwand 111 ausgebildeten Zugang 115. In der Nähe der Verbindungskante 112 weist der Schlitz 114 eine zackenartige Struktur 1142 auf. Die Struktur 1142 soll ein Herausrutschen eines im unteren Teil des Schlitzes 114 bzw. in der Durchgangsöffnung 113 befindlichen Kabels (nicht dargestellt) verhindern, wenn auf das Kabel eine Kraft in einer Richtung von der Öffnung 113 auf die Verbindungskante 112 zu auf das Kabel ausgeübt wird.

In der Figur 2b weist der Schlitz 114 anstelle eines Zackens eine Krümmung 1143 auf, die ebenfalls ein Herausrutschen eines Kabels aus dem Schlitz 114 verhindern soll, gleichzeitig aber ein gegenüber einem zackenförmigen Verlauf einfacheres Einführen eines Kabels durch den Schlitz 114 ermöglicht.

Der Schlitz 114 der Figur 2c entspricht dem Schlitz 1114 der Figur 2b. Allerdings mündet hier der Schlitz 114 nicht radial in die kreisförmig ausgebildete Durchgangsöffnung 113, sondern tritt seitlich versetzt in sie ein, d. h. die Mittellinie des der Durchgangsöffnung 113 zugewandten Endabschnitts 1145 des Schlitzes 114 verläuft nicht durch den Mittelpunkt 1131 der Durchgangsöffnung 113.

Im Ausführungsbeispiel der Figur 2d weist der Schlitz 114 einen mäanderförmigen Verlauf mit zwei in entgegengesetzte Richtungen weisenden Krümmungen 1143 und 1144 auf.

Die Figuren 2e und 2f zeigen Varianten, wonach an einem der Durchgangsöffnung 113 zugewandten Endabschnitt 1145 des Schlitzes 114 ein Halteelement 116 angeordnet ist. Das Halteelement 116 dient dazu, ein Herausrutschen eines in die Durchgangsöffnung 113 eingelegten Kabels durch den Schlitz 114 zum Zugang 115 in der Verbindungskante 112 und damit ein Herausrutschen des Kabels aus der Unterschale 11 zu verhindern. Gleichzeitig kann das Halteteil so ausgebildet und über dem Schlitz angeordnet sein, dass sich die Breite d des Schlitzes verkleinert und somit zusätzlich ein Kabel in der Durchgangsöffnung 113 gegen Herausrutschen gesichert wird.

Das Halteelement 116 überspannt den Schlitz 114 und ist an zwei Abschnitten 1161 und 1162 mit den Schlitz 114 an gegenüberliegende Seiten begrenzenden Abschnitten der Seitenwand 111 verbunden. Zum Verbinden des Halteelements 116 mit der Seitenwand 111 sind unterschiedliche Arten von Verbindungen möglich, z. B. Verkleben, Verschweißen oder Verschrauben. Eine spezielle Variante der Befestigung des Halteelements 116 zeigt die Figur 2f, wonach das Halteelement 116 über eine Clipverbindung 1163 mit der Seitenwand 111 verbunden ist.

Die in der Figur 2g dargestellte Seitenwand 111 weist im Bereich der Durchgangsöffnung 113 eine stabilisierende Struktur 1111 auf. Die stabilisierende Struktur 1111 ist in Form einer sich sternförmig um die Öffnung 113 herum erstreckenden Verdickung der Seitenwand 111 ausgebildet. Eine derartige Verdickung kann zusätzlich mit sich in Bezug auf die Öffnung 113 radial erstreckenden Stegen verstärkt sein. Insbesondere sind derartige stabilisierende Strukturen einstückig mit der Seitenwand 111 ausgebildet.

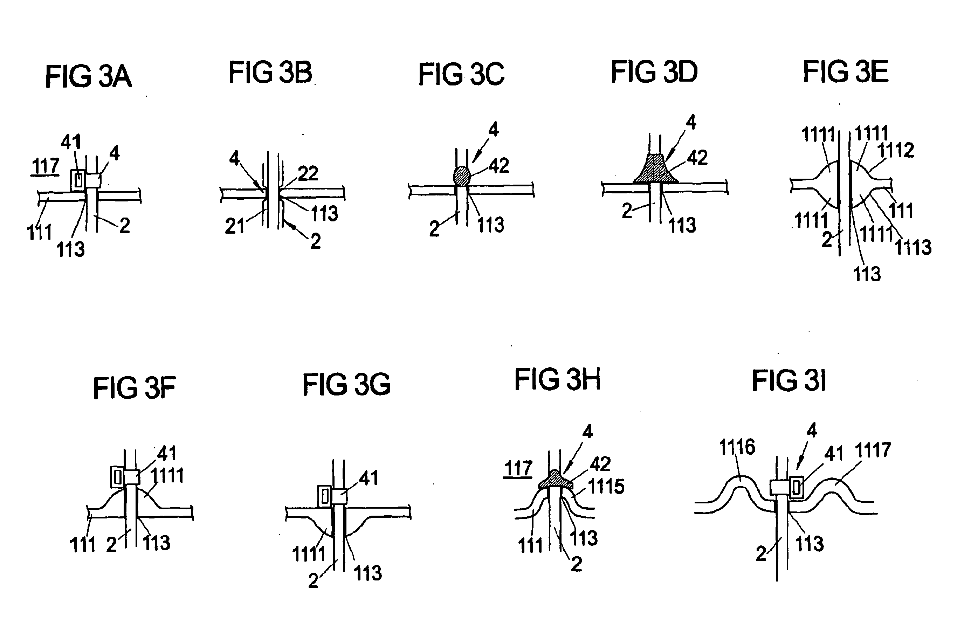

Die Figuren 3a bis 3i zeigen verschiedene Möglichkeiten, eine Zugentlastung im Bereich der Durchgangsöffnung anzubringen, um ein in der Durchgangsöffnung angeordnetes Kabel gegen ein unabsichtliches Herausziehen (in Kabelrichtung) zu sichern. Dargestellt sind jeweils Schnitte durch die Seitenwand 111. Durch eine Durchgangsöffnung 113 in der Seitenwand 111 erstreckt sich jeweils ein Kabel 2.

In der Variante der Figur 3a ist im Innern 117 des Gehäuses 11 ein Kabelbinder 41 als Zugentlastungsstruktur 4 angeordnet. Der Kabelbinder 41 ist fest mit dem Kabel 2 verbunden und liegt am Rand der Durchgangsöffnung auf, wodurch ein Herausziehen des Kabels 2 aus dem Gehäuse in Richtung des Kabels verhindert wird.

Das Kabel 2 der Variante gemäß Figur 3b weist einen Mantel 21 auf, der im Bereich der Durchgangsöffnung 113 eine sickenartige Einbuchtung 22 besitzt. Durch die Einbuchtung 22 weist das Kabel 2 im Bereich der Durchgangsöffnung 113 einen Durchmesser auf, der näherungsweise dem Durchmesser der Durchgangsöffnung 113 entspricht bzw. kleiner ist, während das Kabel außerhalb der Durchgangsöffnung einen größeren Durchmesser aufweist. Der Rand der Durchgangsöffnung 113 greift in die Einbuchtung ein, wodurch das Kabel 2 bezogen auf seine Längsrichtung in der Durchgangsöffnung 113 fixiert wird.

Die Figuren 3c und 3d zeigen weitere Varianten der Zugentlastung, wonach ein am Rand der Durchgangsöffnung 113 anliegendes Element in Form einer wulstartigen Verdickung 42 an der Innenseite der Seitenwand 111 an dem Kabel 2 angeordnet ist. Die Verdickung 42 kann z. B. durch eine harz- oder klebstoffartige Substanz auf den Kabelmantel aufgetragen oder z. B. als Hülse auf das Kabel aufgeschoben werden. Die Verdickung 42 der Figur 3c ist kugelförmig, die der Figur 3d in Form eines Kegelstumpfes ausgebildet.

Die Variante der Figur 3e zeigt eine Seitenwand 111, die im Bereich der Durchgangsöffnung 113 zu beiden Seiten (d. h. zur Innenseite 1112 und zur Außenseite 1113) wulstartige Verdickungen 1111 aufweist, die als stabilisierende Strukturen wirken. Derartige Verdickungen können auch nur zu einer Seite hin ausgebildet sein, z. B. nur zur Innenseite 1112 (Figur 3f) oder nur zur Außenseite 1113 (Figur 3g). Gemäß den Figuren 3f und 3g kann im Bereich der Durchgangsöffnung 113 (d. h. im Bereich der wulstartigen Verdickung 1111) zusätzlich ein weiterer Zugentlastungsmechanismus z. B. in Form eines Kabelbinders 41 angeordnet sein.

Eine stabilisierende Struktur kann im Bereich der Durchgangsöffnung 113 (und/oder auch im Bereich des Schlitzes 114) auch dadurch gebildet sein, dass die Seitenwand 111 einen besonderen Verlauf aufweist, z. B. in Form einer sich zum Innern 117 der Unterschale 11 orientierenden Wölbung 1115 (Fig. 3h), die im Bereich der Durchgangsöffnung 113 am stärksten ist (d. h. an dieser Stelle bezogen auf die Seitenwand 111 am stärksten eingebuchtet ist).

Eine andere Variante einer Wölbung als stabilisierende Struktur zeigt die Figur 3i, wonach sich zwei, an gegenüberliegenden Seiten der Durchgangsöffnung 113 angeordnete Wölbungen 1116 und 1117 erstrecken. Zusätzlich können zu den in den Figuren 3h und 3i gezeigten stabilisierenden Strukturen in Form von Wölbungen Zugentlastungen 4, z. B. in Form einer Verdickung 42 (Figur 3h) oder in Form eines Kabelbinders 41 (Figur 3i) vorgesehen sein.

Die in den Figuren 2 und 3 gezeigten Varianten der Durchgangsöffnung, des Schlitzes und der Zugentlastung können selbstverständlich auch in Kombinationen realisiert sein, die in den Figuren nicht dargestellt sind. Insbesondere können die Zugentlastungsmechanismen und Stabilisierungsstrukturen der Figur 3 mit den in Figur 2 dargestellten Varianten des Schlitzes und der Durchgangsöffnung kombiniert werden.

### Bezugszeichenliste

- 1: Gehäuse
- 11: Unterschale
- 12: Oberschale
- 111, 121: Seitenwand
- 1111, 1112: Verdickung
- 1113: Außenseite
- 1115, 1116, 1117: Wölbung
- 112, 122: Verbindungskante
- 113: Durchgangsöffnung
- 1131: Mittelpunkt
- 114: Schlitz
- 1141, 1143, 1144: Krümmung
- 1142: Zacken
- 115: Zugang
- 116: Halteelement
- 117: Gehäuseinneres
- 1161,1162: Abschnitt
- 1163: Clipstruktur
- 2: Kabel
- 22: Verjüngung
- 3: Clipverbindung
- 31: erste Struktur
- 32: zweite Struktur
- 33: Raststruktur
- 4: Zugentlastung
- 41: Kabelbinder
- 42: Wulst

## Patentansprüche

1. Gehäuse für eine Gassackanordnung einer Fahrzeuginsassen-Schutzvorrichtung, mit
- mindestens zwei Gehäuseteilen (11, 12), die jeweils eine mit mindestens einer Verbindungskante (112, 122) abschließende Seitenwand (111, 121) aufweisen, wobei die Gehäuseteile (11, 12) bei geschlossenem Gehäuse über Verbindungskanten (112, 122) aneinander liegen; und
- einer Durchgangsöffnung (113) für eine mit einer Komponente der Gassackanordnung zu verbindende elektrische Verbindungsleitung (2), die beabstandet zu der oder jeder Verbindungskante (112, 122) in der Seitenwand (111) eines der Gehäuseteile (11, 12) gebildet ist,
**gekennzeichnet durch**
eine in der Seitenwand (111) dieses Gehäuseteils (11) ausgebildeten und von der Verbindungskante (112) zur Durchgangsöffnung (113) verlaufenden Zugangsöffnung (114), **durch** die hindurch eine winklig zur Seitenwand (111) ausgerichtete elektrische Verbindungsleitung (2) in die Durchgangsöffnung (113) eingeführt werden kann.

2. Gehäuse nach Anspruch 1, **dadurch gekennzeichnet, dass** nur eines der Gehäuseteile (11, 12) eine Durchgangsöffnung (113) aufweist.

3. Gehäuse nach einem der vorhergehenden Ansprüche, **dadurch gekennzeichnet, dass** die Durchgangsöffnung (113) näherungsweise vollkreisförmig ausgebildet ist.

4. Gehäuse nach einem der vorhergehenden Ansprüche, **dadurch gekennzeichnet, dass** die Zugangsöffnung (114) in Form eines Schlitzes ausgebildet ist.

5. Gehäuse nach einem der vorhergehenden Ansprüche, **dadurch gekennzeichnet, dass** die Zugangsöffnung (114) so ausgebildet ist, dass sie einem Herausbewegen einer in die Durchgangsöffnung (113) eingelegten elektrischen Verbindungsleitung (2) aus der Gehäuseteil (11) durch die Zugangsöffnung (114) hindurch zur Verbindungskante (112) entgegenwirkt.

6. Gehäuse nach einem der vorhergehenden Ansprüche, **dadurch gekennzeichnet, dass** die Seitenwand (111) im Bereich der Zugangsöffnung (114) und/oder der Durchgangsöffnung (113) eine stabilisierende Struktur (1111, 1112) aufweist.

7. Gehäuse nach Anspruch 6, **dadurch gekennzeichnet, dass** die stabilisierende Struktur (1111, 1112) durch eine Verdickung der Seitenwand (111) gebildet ist.

8. Gehäuse nach Anspruch 6 oder 7, **dadurch gekennzeichnet, dass** die stabilisierende Struktur (1111, 1112) einen an der Seitenwand (111) angeordneten Steg oder eine Wulst aufweist.

9. Gassackmodul für ein Fahrzeuginsassen-Rückhaltesystem, mit
- einem Gehäuse (1) gemäß einem der vorhergehenden Ansprüche;
- einer in dem Gehäuse (1) angeordneten Komponente;
- einer elektrischen Verbindungsleitung (2), die sich durch die Durchgangsöffnung (113) im Gehäuse (1) hindurch zu der Komponente erstreckt.

10. Gassackmodul nach Anspruch 9, **dadurch gekennzeichnet, dass** die Gehäuseteile (11, 12) des Gehäuses (1) mit ihren Verbindungskanten (112, 122) aufeinander liegen, so dass ein Herausbewegen der elektrischen Verbindungsleitung (2) aus dem einen Gehäuseteil (11) durch die in ihm ausgebildete Zugangsöffnung (114) hindurch zur Verbindungskante (112) verhindert ist.

11. Gassackmodul nach Anspruch 9 oder 10, **dadurch gekennzeichnet, dass** in dem Gehäuse (1) ein aufblasbarer Gassack angeordnet und die Komponente ein Gasgenerator zum Aufblasen des Gassacks ist.

12. Gassackmodul nach einem der Ansprüche 9 bis 11, **dadurch gekennzeichnet, dass** die Zugangsöffnung (114) schlitzartig ausgebildet ist und quer zu ihrer Haupterstreckungsrichtung eine Breite (d) aufweist, die kleiner ist als der Außendurchmesser der elektrischen Verbindungsleitung (2) oder die dem Außendurchmesser der elektrischen Verbindungsleitung (2) entspricht.

13. Gassackmodul nach einem der Ansprüche 9 bis 12, **dadurch gekennzeichnet, dass** die Zugangsöffnung (114) schlitzartig ausgebildet ist und quer zu ihrer Haupterstreckungsrichtung eine Breite (d) aufweist, die größer ist als der Außendurchmesser der elektrischen Verbindungsleitung (2).

14. Gassackmodul nach einem der Ansprüche 9 bis 13, **dadurch gekennzeichnet, dass** sich über die Zugangsöffnung (114) ein durchgehendes Haltelement (116) erstreckt, das ein Herausbewegen der elektrischen Verbindungsleitung (2) aus dem Gehäuseteil (11) durch die Zugangsöffnung (114) hindurch zur Verbindungskante (112) verhindert.

15. Gassackmodul nach einem der Ansprüche 9 bis 14, **gekennzeichnet durch** eine mit der elektrischen Verbindungsleitung (2) zusammenwirkende Zugentlastungsstruktur (4), die einem Herausziehen der elektrische Verbindungsleitung (2) aus dem Gehäuse (1) in einer Richtung parallel zur Erstreckungsrichtung der elektrischen Verbindungsleitung (2) entgegenwirkt.

## Claims

1. A housing for an airbag arrangement of a vehicle occupant protection device, comprising
- at least two housing parts (11, 12), each comprising a side wall (111, 121) terminating in at least one connecting edge (112, 122), the housing parts (11, 12) by way of the connecting edges (112, 122) lying contiguous with one another when the housing is closed; and
- a passage opening (113) for an electrical connection lead (2) to be connected to a component of the airbag arrangement, said opening being formed in the side wall (111) of one of the housing parts (11, 12) at a distance from the or each connecting edge (112, 122)
**characterized by**
an access opening (114) formed in the side wall (111) of this housing part (11) and running from the connecting edge (112) to the passage opening (113), through which access opening an electrical connection lead (2) aligned at an angle to the side wall (111) can be introduced into the passage opening (113).

2. The housing as claimed in claim 1, **characterized in that** only one of the housing parts (11, 12) comprises a passage opening (113).

3. The housing as claimed in one of the preceding claims, **characterized in that** the passage opening (113) is approximately of fully circular design shape.

4. The housing as claimed in one of the preceding claims, **characterized in that** the access opening (114) is embodied in the form of a slot.

5. The housing as claimed in one of the preceding claims, **characterized in that** the access opening (114) is designed so as to counteract an electrical connection lead (2), introduced into the passage opening (113), being drawn out of the housing part (11) through the access opening (114) to the connecting edge (112).

6. The housing as claimed in one of the preceding claims, **characterized in that** the side wall (111) has a stabilizing structure (1111, 1112) in the area of the access opening (114) and/or in the area of the passage opening (113).

7. The housing as claimed in claim 6, **characterized in that** the stabilizing structure (1111, 1112) is formed by a thickening of the side wall (111).

8. The housing as claimed in claim 6 or 7, **characterized in that** the stabilizing structure (1111, 1112) has a web or a bead arranged on the side wall (111).

9. An airbag module for a vehicle occupant restraint system, comprising
- a housing (1) as claimed in one of the preceding claims;
- a component arranged in the housing (1);
- an electrical connection lead (2), which extends through the passage opening (113) in the housing (1) to the component.

10. The airbag module as claimed in claim 9, **characterized in that** the housing parts (11, 12) of the housing (1) lie with their connecting edges (112, 122) on top of each other, so as to prevent the electrical connection lead (2) being drawn out of the one housing part (11) through the access opening (114) formed therein to the connecting edge (112).

11. The airbag module as claimed in claim 9 or 10, **characterized in that** an inflatable airbag is arranged in the housing (1) and the component is a gas generator for inflation of the airbag.

12. The airbag module as claimed in one of claims 9 to 11, **characterized in that** the access opening (114) is of slot-like design and has a width (d), measured transversely to the main direction in which it extends, which is smaller than the outside diameter of the electrical connection lead (2) or which is equal to the outside diameter of the electrical connection lead (2).

13. The airbag module as claimed in one of claims 9 to 12, **characterized in that** the access opening (114) is of slot-like design and has a width (d), measured transversely to the main direction in which extends, which is greater than the outside diameter of the electrical connection lead (2).

14. The airbag module as claimed in one of claims 9 to 13, **characterized in that** a continuous retaining element (116), which prevents the electrical connection lead (2) being drawn out of the housing part (1) through the access opening (114) to the connecting edge (112), extends over the access opening (114).

15. The airbag module as claimed in one of claims 9 to 14, **characterized by** a cable drag relief structure (4) interacting with the electrical connection lead (2), which prevents the electrical connection lead (2) being drawn out of the housing (1) in a direction parallel to the direction in which the electrical connection lead (2) extends.

## Revendications

1. Boîtier pour un ensemble de sac à gaz d'un dispositif de protection d'occupant de véhicule avec
- au moins deux parties de boîtier (11, 12) qui présentent respectivement une paroi latérale (111, 121) se terminant par au moins une arête de liaison (112, 122), les parties de boîtier (11, 12) reposant l'une sur l'autre lorsque le boîtier est fermé par le biais des arêtes de liaison (112, 122) ; et
- une ouverture de passage (113) pour un câble de liaison (2) électrique à relier à un composant de l'ensemble de sac à gaz qui est formé à distance de ou de chaque arête de liaison (112, 122) dans la paroi latérale (111) de l'une des parties de boîtier (11, 12),
**caractérisé par**
une ouverture d'accès (114) réalisée dans la paroi latérale (111) de cette partie de boîtier (11) et s'étendant de l'arête de liaison (112) jusqu'à l'ouverture de passage (113), au travers de laquelle un câble de liaison (2) électrique orienté de manière angulaire par rapport à la paroi latérale (111) peut être introduit dans l'ouverture de passage (113).

2. Boîtier selon la revendication 1, **caractérisé en ce que** seule l'une des parties de boîtier (11, 12) présente une ouverture de passage (113).

3. Boîtier selon l'une quelconque des revendications précédentes, **caractérisé en ce que** l'ouverture de passage (113) est réalisée approximativement en forme de cercle entier.

4. Boîtier selon l'une quelconque des revendications précédentes, **caractérisé en ce que** l'ouverture d'accès (114) est réalisée en forme de fente.

5. Boîtier selon l'une quelconque des revendications précédentes, **caractérisé en ce que** l'ouverture d'accès (114) est réalisée de sorte qu'elle agisse contre un déplacement d'un câble de liaison (2) électrique introduit dans l'ouverture de passage (113) hors de la partie de boîtier (11) au travers de l'ouverture d'accès (114) à l'arête de liaison (112).

6. Boîtier selon l'une quelconque des revendications précédentes, **caractérisé en ce que** la paroi latérale (111) présente dans la zone de l'ouverture d'accès (114) et/ou de l'ouverture de passage (113) une structure (1111, 1112) stabilisatrice.

7. Boîtier selon la revendication 6, **caractérisé en ce que** la structure stabilisatrice (1111, 1112) est formée par un épaississement de paroi latérale (111).

8. Boîtier selon la revendication 6 ou 7, **caractérisé en ce que** la structure (1111, 1112) stabilisatrice présente une nervure ou un bourrelet disposé sur la paroi latérale (111).

9. Module de sac à gaz pour un système de retenue d'occupant de véhicule avec
- un boîtier (1) selon l'une quelconque des revendications précédentes ;
- un composant disposé dans le boîtier (1) ;
- un câble de liaison électrique (2) qui s'étend au travers de l'ouverture de passage (113) dans le boîtier (1) jusqu'au composant.

10. Module de sac à gaz selon la revendication 9, **caractérisé en ce que** les parties de boîtier (11, 12) du boîtier (1) reposent avec leurs arêtes de liaison (112, 122) l'une sur l'autre de sorte qu'un déplacement du câble de liaison électrique (2) hors d'une partie de boîtier (11) au travers de l'ouverture d'accès (114) réalisée dans celle-ci à l'arête de liaison (112) soit empêché.

11. Module de sac à gaz selon la revendication 9 ou 10, **caractérisé en ce qu'**un sac à gaz gonflable est disposé dans le boîtier (1) et le composant est un générateur à gaz pour le gonflage du sac à gaz.

12. Module de sac à gaz selon l'une quelconque des revendications 9 à 11, **caractérisé en ce que** l'ouverture d'accès (114) est réalisée comme une fente et présente transversalement à son sens de développement principal une largeur (d) qui est plus petite que le diamètre extérieur du câble de liaison (2) électrique ou qui correspond au diamètre extérieur du câble de liaison (2) électrique.

13. Module de sac à gaz selon l'une quelconque des revendications 9 à 12, **caractérisé en ce que** l'ouverture d'accès (114) est réalisée en forme de fente et présente transversalement à son sens de développement principal une largeur (d) qui est plus grande que le diamètre extérieur du câble de liaison (2) électrique.

14. Module de sac à gaz selon l'une quelconque des revendications 9 à 13, **caractérisé en ce qu'**un élément de retenue (116) continu s'étend sur l'ouverture d'accès (114), lequel empêche un déplacement du câble de liaison (2) électrique hors de la partie de boîtier (11) au travers de l'ouverture d'accès à l'arête de liaison (112).

15. Module de sac à gaz selon l'une quelconque des revendications 9 à 14, **caractérisé par** une structure de décharge de traction (4) coopérant avec le câble de liaison (2) électrique qui agit contre un retrait du câble de liaison (2) électrique hors du boîtier (1) dans une direction parallèle au sens de développement du câble de liaison (2) électrique.
